# EUROPEAN PATENT APPLICATION

(11) **EP 4 530 171 A1**
(43) Date of publication of application: **02.04.2025**
(21) Application number: 24202088.1
(22) Date of filing: 24.09.2024
(51) Int. Cl.: B62J 43/16, B60L 50/60, B62J 43/28, B62J 9/14

(54) **BATTERY ARRANGEMENT OF A STRADDLE-TYPE VEHICLE**

(30) Priority: 29.09.2023 JP 2023169518
(71) Applicant: Suzuki Motor Corporation, Shizuoka 432-8611 (JP)
(72) Inventor: KAMBAYASHI, Takahiro, Shizuoka (JP)
(74) Representative: Haseltine Lake Kempner LLP

(57) **Abstract**

A straddle-type vehicle (1) of an electric type that travels using electric power. The straddle-type vehicle (1) includes a seat (35) provided behind a handle (26) and on which buttocks of a driver are to be placed, a floor board (31) installed below and in front of the seat (35), and a battery (61) of a fixed type installed below the seat (35). The battery (35) is tilted forward such that a lower end of a front surface of the battery (35) is brought close to the floor board (31). The lower end of the front surface of the battery (61) is located behind an upper end of the front surface of the battery (61).

## Description

### TECHNICAL FIELD

The present disclosure relates to a straddle-type vehicle.

### BACKGROUND ART

In recent years, an electric straddle-type vehicle that travels using electric power has been developed. A known example of this type of straddle-type vehicle is a scooter-type vehicle in which a storage box and a battery are installed below a seat (for example, see WO2012/043562A1). In the straddle-type vehicle disclosed in Patent Literature 1, a low floor board is installed in front of the seat, and a space below the seat is covered with a body cover. The storage box is installed in an upper space inside the body cover, and a fixed battery is installed in a lower space inside the body cover. By opening the seat, items such as a helmet can be stored in the storage box.

However, in a case where a large-sized battery is mounted on the straddle-type vehicle disclosed in Patent Literature 1, a tread surface on the floor board is narrowed, making the feet of a driver cramped. In addition, in a case where a load shared by a front wheel is small and a cargo is placed on a rear carrier, small vibrations (shimmy phenomenon) tends to occur in a handle or the like.

### SUMMARY OF INVENTION

Aspect of non-limiting embodiments of the present disclosure relates to provide a straddle-type vehicle that does not impair comfort of a driver even in a case where a large battery is installed.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided a straddle-type vehicle (1) of an electric type that travels using electric power, the straddle-type vehicle (1) including:
a seat (35) provided behind a handle (26) and on which buttocks of a driver are to be placed;
a floor board (31) installed below and in front of the seat (35); and
a battery (61) of a fixed type installed below the seat (35),
in which the battery (35) is tilted forward such that a lower end of a front surface of the battery (35) is brought close to the floor board (31), and
in which the lower end of the front surface of the battery (61) is located behind an upper end of the front surface of the battery (61).

### BRIEF DESCRIPTION OF DRAWINGS

Exemplary embodiment(s) of the present invention will be described in detail based on the following figures, wherein:
FIG. 1 is a left side view of a straddle-type vehicle according to the present embodiment;
FIG. 2 is a left side view of a vehicle body rear portion according to a comparative example;
FIG. 3 is a left side view of a vehicle body rear portion according to the present embodiment;
FIG. 4 is a top view of the vehicle body rear portion according to the present embodiment;
FIG. 5 is a diagram illustrating a battery layout according to the present embodiment; and
FIG. 6 is a diagram illustrating the battery layout according to the present embodiment.

### DESCRIPTION OF EMBODIMENTS

A straddle-type vehicle according to an aspect of the present disclosure travels using electric power of a battery. A seat on which buttocks of a driver are to be placed is installed behind a handle of the straddle-type vehicle. A floor board is installed below and in front of the seat, and a fixed battery is installed below the seat. The battery is tilted forward such that a lower end of a front surface of the battery approaches the floor board, and a lower end of the front surface of the battery is located behind an upper end of front surface. Even in a case where a battery having a large capacity is installed, the lower end of the front surface of the battery is positioned rearward due to the forward tilting of the battery, so that a wide tread surface of the floor board is secured, and the feet of the driver are less likely to be cramped. The center of gravity of the battery is positioned to a front side as the front surface of the battery tilts forward. By increasing a load shared by the front wheel, it is possible to reduce the shimmy phenomenon that causes small vibrations in the handle and the like.

### [Embodiment]

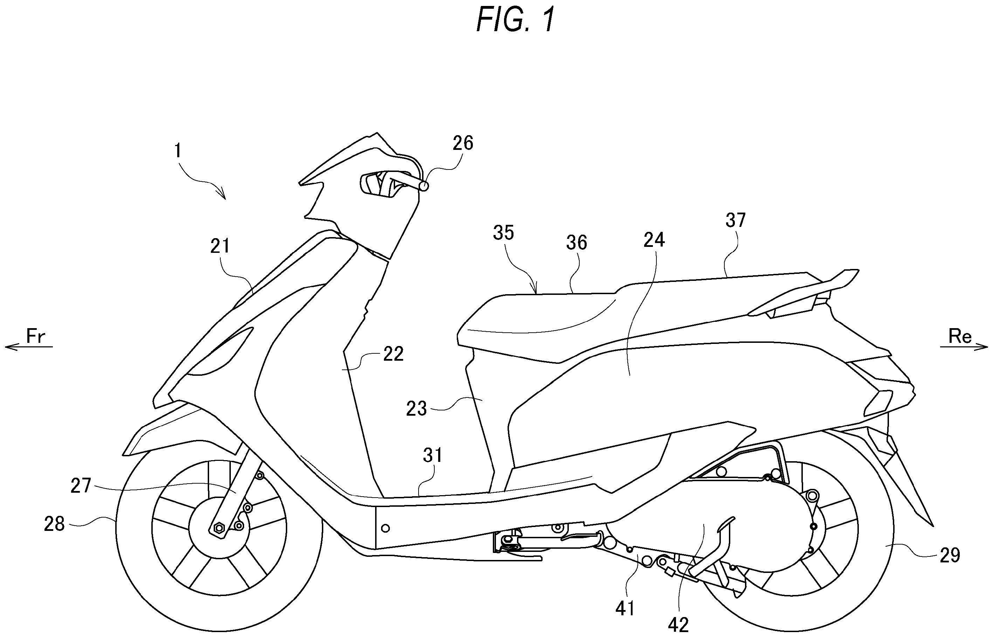

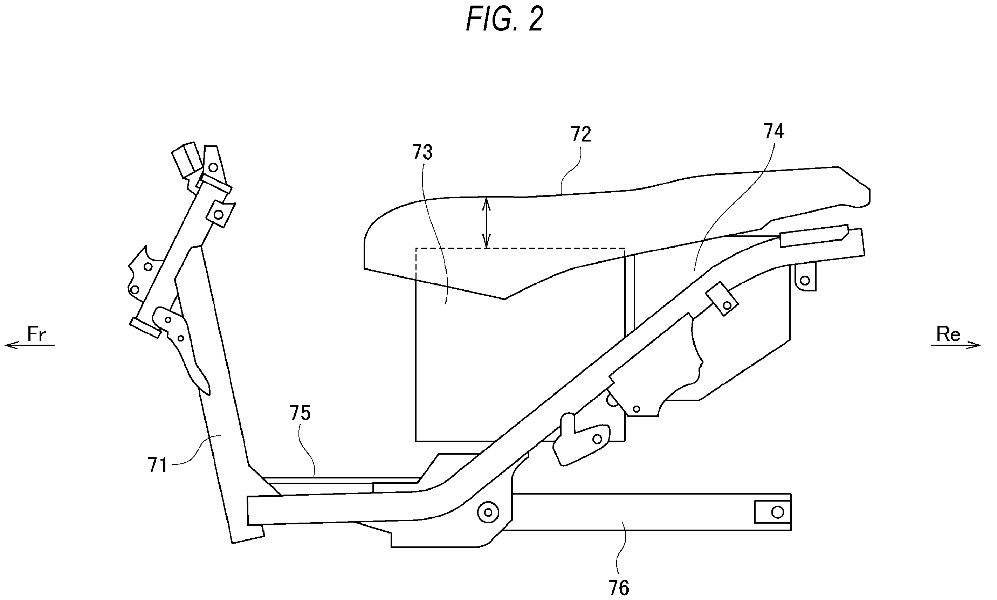

Hereinafter, a straddle-type vehicle according to the present embodiment will be described with reference to the accompanying drawings. FIG. 1 is a left side view of a straddle-type vehicle according to the present embodiment. FIG. 2 is a left side view of a vehicle body rear portion according to a comparative example. In the following drawings, an arrow Fr indicates a vehicle front side, an arrow Re indicates a vehicle rear side, an arrow L indicates a vehicle left side, and an arrow R indicates a vehicle right side.

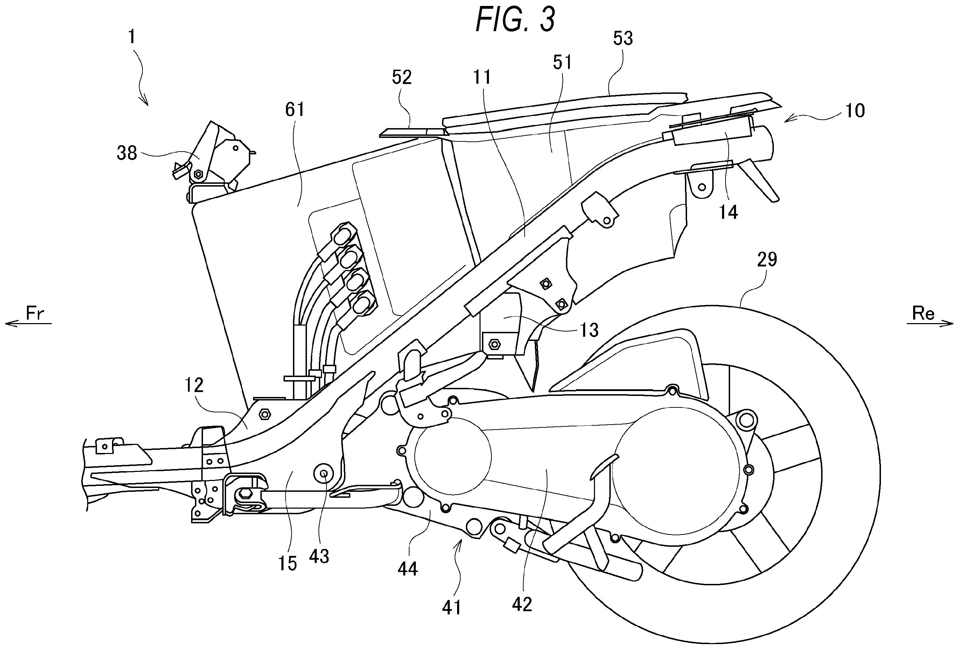

As shown in FIG. 1, a straddle-type vehicle 1 is constructed by attaching various covers, as a vehicle body exterior, to an underbone type vehicle body frame 10 (see FIG. 3). The straddle-type vehicle 1 is provided with a front cover 21 on the vehicle front side, and a front leg shield 22, which protects feet of a rider, on a rear side of the front cover 21. A floor board 31 extends rearward from a lower end of the front leg shield 22. A body cover 23 and a pair of side covers 24 are provided on the rear side of the floor board 31. A seat 35 is installed above the side covers 24. A seat 35 includes a front seat surface 36 for the driver and a rear seat surface 37 for a passenger.

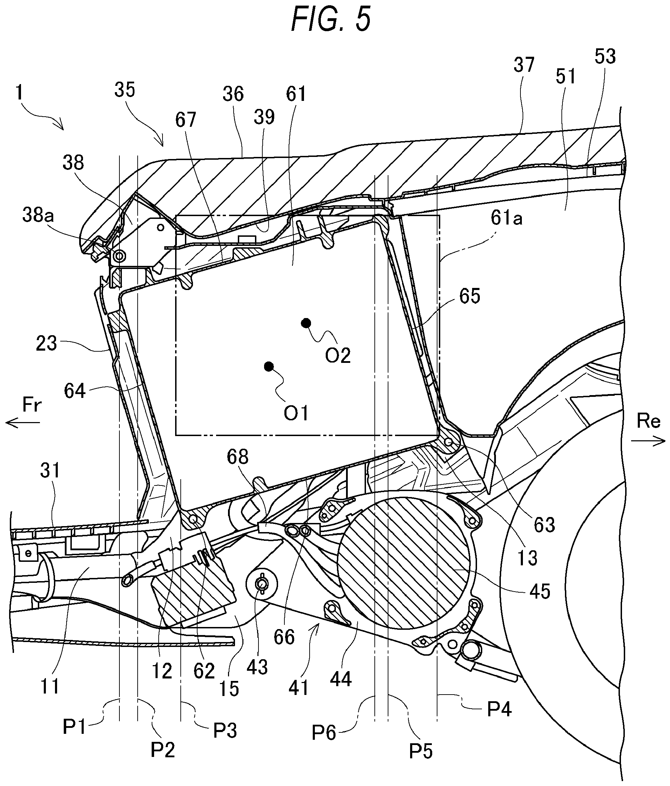

A handle 26 is provided above the front cover 21. A front wheel 28 is rotatably supported below the front cover 21, via a pair of front forks 27. A swing arm 41 with a motor 45 (see FIG. 5) is provided below the side cover 24. The swing arm 41 is swingably coupled to the vehicle body frame 10. A rear wheel 29 is rotatably supported at a rear portion of the swing arm 41. A left side surface of the swing arm 41 is covered by a swing arm cover 42. Power is transmitted from the motor 45 to the rear wheel 29, via a belt-type continuously variable transmission (not shown) inside the swing arm cover 42.

In a general straddle-type vehicle, a battery and a storage box are installed below a seat. For example, in a straddle-type vehicle according to a comparative example shown in FIG. 2, a battery 73 having a substantially rectangular shape in a side view and a storage box 74 are installed side by side in a front-rear direction in a space below the seat 72. A floor board 75 is installed at an obliquely lower side in front of the battery 73, and the storage box 74 is installed at the rear side of the battery 73. A swing arm 76 is swingably supported by a vehicle body frame 71 below the battery 73, and a seat 72 is installed above the battery 73 so as to cover the battery 73 and the storage box 74.

In a case where the large-sized battery 73 is installed in the straddle-type vehicle, an installation space for peripheral components and the like is limited due to the battery 73. A tread surface of the floor board 75 becomes narrower in front of the battery 73, a storage capacity of the storage box 74 becomes smaller behind the battery 73, a swing space of the swing arm 76 becomes narrower below the battery 73, and a cushion thickness of the seat 72 becomes smaller above the battery 73. In addition, a load shared by a front wheel is reduced, and shimmy phenomenon is more likely to occur. Therefore, in the present embodiment, by tilting a battery 61 (see FIG. 3) forward, a space for installing peripheral components is ensured, and the center of gravity of the battery 61 is moved forward to reduce the shimmy phenomenon.

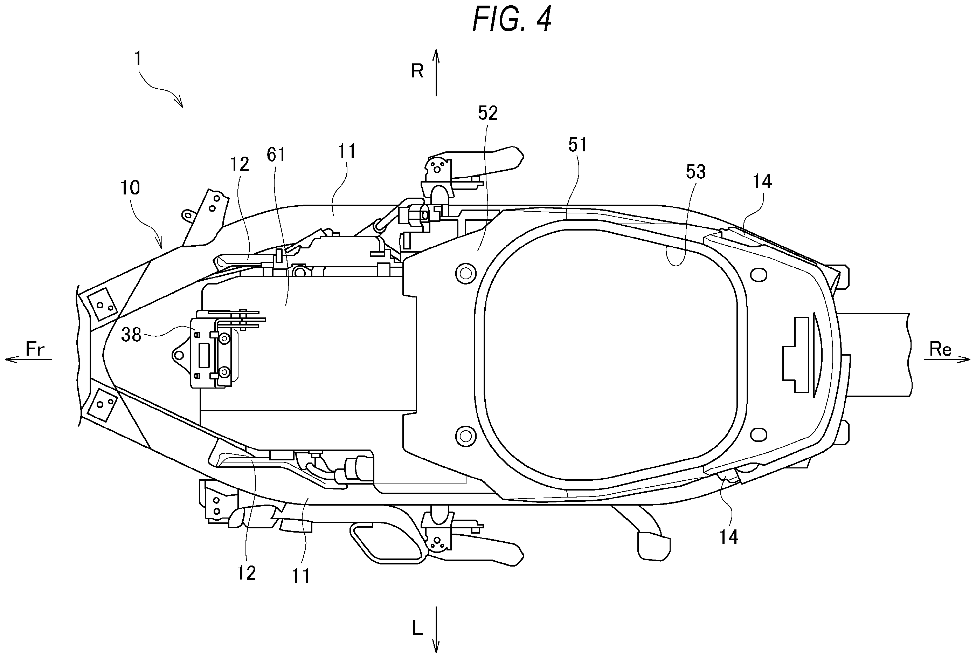

The structure of a rear portion of the straddle-type vehicle will be described below with reference to FIGs. 3 and 4. FIG. 3 is a left side view of a vehicle body rear portion according to the present embodiment. FIG. 4 is a top view of the vehicle body rear portion according to the present embodiment. FIGs. 3 and 4 show a state in which the seat, the cover, the floor board, and the like are omitted from the straddle-type vehicle.

As shown in FIGs. 3 and 4, a pair of side frames 11 extend obliquely upward from the front to the rear, at the vehicle body rear portion of the straddle-type vehicle 1. The battery 61 and a storage box 51 are installed side by side in the front-rear direction, inside the pair of side frames 11. A battery case of the battery 61 is formed in a substantially rectangular shape in a side view. A plurality of cells (single cells) are housed inside the battery case. In a side view, the battery 61 is tilted forward such that a lower corner on a front side of the battery 61 is the lowest, an upper corner on the rear side of the battery 61 is the highest, an upper corner on the front side of the battery 61 is the most forward, and a lower corner on the rear side of the battery 61 is the most rearward.

A fixing bracket 12 protrudes upward from the vicinity of a rising edge on each of the front side of the pair of side frames 11. A fixing bracket 13 protrudes downward from an intermediate position of each of the pair of side frames 11. A front fixing portion 62 (see FIG. 5) of a front end of a lower surface of the battery 61 is fixed to the fixing bracket 12 on the front side. A rear fixing portion 63 (see FIG. 5) of a rear end of the lower surface of the battery 61 is fixed to the fixing bracket 13 on the rear side. The rear fixing portion 63 is fixed to the pair of side frames 11 at a higher position than the front fixing portion 62 of the battery 61. The battery 61 is supported from below by the pair of side frames 11 in a forward tilting position.

A flange 52 is provided around an opening 53 on an upper surface of the storage box 51. A lower surface of the storage box 51 is tilted so as to avoid interference with the rear wheel 29. The front side of the flange 52 covers an upper surface of the battery 61 at the rear side. The rear side of the flange 52 covers rear ends of the pair of side frames 11. A fixing bracket 14 is provided at the rear ends of the pair of side frames 11. A support surface of the fixing bracket 14 is located at approximately the same height as the upper corner on the rear side of the battery 61. The front side of the flange 52 is fixed to the upper corner on the rear side of the battery 61. The rear side of the flange 52 is fixed to the fixing bracket 14 of the pair of side frames 11.

A fixing bracket 15 protrudes downward from the vicinity of the rising edge of the front side of the pair of side frames 11. The swing arm 41 is swingably supported by the fixing bracket 15 via a pivot (swing center) 43. A base end of the swing arm 41 is a motor case 44. The motor 45 (see FIG. 5) is installed inside the motor case 44. A rear end of the swing arm 41 supports the rear wheel 29, and is connected to a rear suspension (not shown). Since the motor 45 is positioned near the pivot 43 of the swing arm 41, vibrations transmitted to the motor 45 when the swing arm 41 swings are reduced.

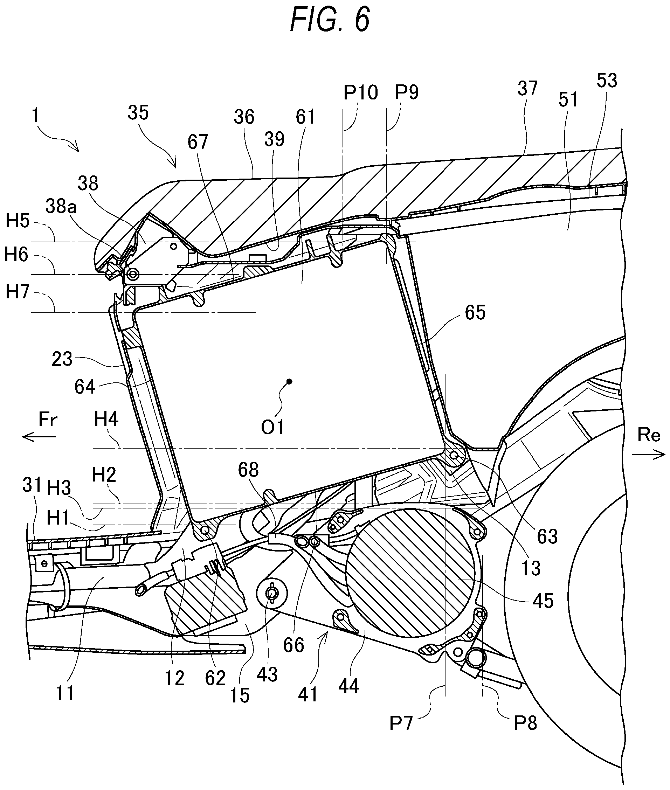

Hereinafter, a battery layout will be described with reference to FIGs. 5 and 6. FIGs. 5 and 6 are diagrams illustrating the battery layout according to the present embodiment. FIGs. 5 and 6 are sectional views cut along a vehicle body center line extending in the front-rear direction of the vehicle body.

As shown in FIG. 5, the seat 35 is installed in the vehicle body behind the handle. The front seat surface 36 on which buttocks of the driver are to be placed is formed on the front side of the seat 35. The rear seat surface 37 on which buttocks of a passenger are to be placed is formed at the rear portion of the seat 35. A storage space covered with the body cover 23 and the side covers 24 (see FIG. 1) is secured below the seat 35. The fixed battery 61 is installed in a front space below the seat 35. The storage box 51 is installed in a rear space below the seat 35. The floor board 31 is installed below the front of the seat 35. The swing arm 41 is installed below the battery 61 and the storage box 51.

The floor board 31 is installed in front of the battery 61. The storage box 51 is installed behind the battery 61. The battery 61 is positioned between the floor board 31 and the storage box 51 in the front-rear direction. The seat 35 is installed above the battery 61. The swing arm 41 is installed below the battery 61. The battery 61 is positioned between the seat 35 and the swing arm 41 in an upper-lower direction. In a case where the straddle-type vehicle 1 is stopped, the seat 35 is opened and closed by a hinge 38 above the battery 61. In a case where the straddle-type vehicle 1 is traveling, the swing arm 41 swings below the battery 61 using the pivot 43 as a fulcrum.

As described above, the battery 61 is supported by the pair of side frames 11, in the forward tilting position. In this case, the center of gravity O1 of the battery 61 in the forward tilting position is located forward and downward of the center of gravity 02 of a battery 61a in a horizontal position indicated by the two-dot chain line. More specifically, a rear end of a lower surface of the battery 61a is positioned slightly above an upper limit position of the swing of the swing arm 41. The rear end of the lower surface and a front end of the lower surface of the battery 61a are supported at the same height. The battery 61 of the present embodiment is supported with the rear end of the lower surface of the battery 61a in the horizontal position as a fulcrum, and is tilted forward so that the lower surface front end of the battery 61a is lowered.

That is, the battery 61 is tilted forward using a position above the upper limit position of the swing of the swing arm 41 as a fulcrum. The tilting of the battery 61 is adjusted to an angle at which interference with the swing arm 41 during swinging does not occur. A front surface 64 of the battery 61 is tilted so as to recede rearward from a front surface upper end toward a front surface lower end. A rear surface 65 of the battery 61 is tilted so as to recede forward from a lower end of the rear surface toward a upper end of the rear surface. A lower surface 66 of the battery 61 is tilted upward from the lower surface front end to the lower surface rear end. An upper surface 67 of the battery 61 is tilted downward from a rear end of the upper surface to a front end of the upper surface.

By tilting the battery 61 forward, the front surface lower end of the battery 61 is brought close to the floor board 31. The front surface 64 of the battery 61 is tilted such that a lower end of the front surface of the battery 61 is located behind an upper end of the front surface. The battery 61 is covered from the front side by the body cover 23, below the seat 35. A front surface of the body cover 23 is tilted along the front surface 64 of the battery 61. A portion where a lower end of the body cover 23 is in contact with the floor board 31 is a rear end of a tread surface of the floor board 31. An upper side of the body cover 23 protrudes forward to widen an installation space for the battery 61. A lower side of the body cover 23 is retracted rearward to widen the tread surface of the floor board 31.

A front-rear position P1 of an upper end of the front surface of the battery 61 is located in front of a front-rear position P2 of the rear end of tread surface of the floor board 31. A front-rear position P3 of a lower end of the front surface of the battery 61 is located behind the front-rear position P2 of the rear end of the tread surface of the floor board 31. By positioning the front surface upper end of the battery 61 on the front side, the battery 61 with a large capacity can be installed. By positioning the front surface lower end of the battery 61 on the rear side, a wide tread surface of the floor board 31 is ensured, so that the feet of the driver are less likely to be cramped. The center of gravity O1 of battery 61, which is a heavy object, is positioned on the front side, and a load shared by the front wheel increases, thereby reducing the shimmy phenomenon.

By tilting the battery 61 forward, the front surface 64 of the battery 61 is brought closer to a front end of the seat 35, and a rear space of the battery 61 is widened. The rear surface 65 of the battery 61 is tilted such that the upper end of the rear surface of the battery 61 is located in front of the lower end of the rear surface. The front surface of the storage box 51 is tilted along the rear surface 65 of the battery 61. The storage capacity of the storage box 51 is increased by the amount that the front surface of the storage box 51 is tilted. A front-rear width of the storage box 51 is widened upward from a bottom surface. The upper surface of the storage box 51 is opened, and an opening 53 of the storage box 51 is enlarged to make it easier to take items in and out.

A front-rear position P4 of the lower end of the rear surface of the battery 61 is located behind a front-rear position P5 of the upper end of the front surface of the storage box 51. A front-rear position P6 of the upper end of the rear surface of the battery 61 is located in front of the front-rear position P5 of the upper end of the front surface of the storage box 51. By positioning the rear surface lower end of the battery 61 on the rear side, the battery 61 with a large capacity can be installed. By positioning the rear surface upper end of the battery 61 on the front side, a wide storage capacity of the storage box 51 is secured. In this way, the rear space is widened by tilting of the battery 61 forward, and the storage box 51 is installed using the rear space effectively.

As shown in FIG. 6, the swing arm 41 is supported by the fixing bracket 15 of the side frame 11 via the pivot 43. The motor 45 having a circular shape in a side view is installed in the motor case 44 of the swing arm 41. When viewed from the side, an upper surface of the motor case 44 is tilted upward from the pivot 43 to the lower side, and a lower surface of the motor case 44 is tilted downward from the pivot 43 to the lower side. On a base end side of the swing arm 41, due to the tilting of the battery 61 and the shape of the motor case 44, a space between the lower surface 66 of the battery 61 and an upper surface of the swing arm 41 is sufficiently widened.

The front fixing portion (fixing portion) 62 protrudes from the front end of the lower surface of the battery 61. The rear fixing portion 63 protrudes from the rear end of the lower surface of the battery 61. The front fixing portion 62 and the rear fixing portion 63 are fixed to the fixing brackets 12 and 13 extending from the side frame 11 rising rearward. Since the front fixing portion 62 and the rear fixing portion 63 do not enter the battery 61, a plurality of cells can be efficiently installed in the battery 61, which has a substantially rectangular shape in a side view. Similarly to the side frame 11, the lower surface 66 of the battery 61 is also tilted to rise rearward, so that the lower surface 66 of the battery 61 is brought close to the side frame 11, and the front fixing portion 62 and the rear fixing portion 63 are formed compactly.

The front fixing portion 62 is located behind the front-rear position P3 (see FIG. 5) of the lower end of the front surface of the battery 61. Since the front fixing portion 62 is brought close to the front surface 64 of the battery 61, a fixing pitch in the front-rear direction between the front fixing portion 62 and the rear fixing portion 63 is increased to increase the support rigidity. The front fixing portion 62 protrudes downward along the front surface 64 of the battery 61, and the front fixing portion 62 does not protrude forward from the front surface 64 of the battery 61, so that a wide tread surface of the floor board 31 can be secured.

The pivot 43 of the swing arm 41 is located in front of the rear end of the lower surface of the battery 61 and behind the front end of the lower surface of the battery 61. By tilting the battery 61 forward, the lower surface front end of the battery 61 is brought close to the pivot 43. The lower surface 66 of the battery 61 is tilted such that the rear end of the lower surface of the battery 61 is positioned above the front end of the lower surface. At this time, the lower surface 66 of the battery 61 is positioned outside the swing space of the swing arm 41 about the pivot 43. The battery 61 is installed at a low position such that interference between the battery 61 and the swing arm 41 is prevented during the swing of the swing arm 41, thereby lowering the center of gravity of the vehicle.

A front-rear position P7 of the rear end of the lower surface of the battery 61 is located in front of a front-rear position P8 of a rear surface of the motor case 44 of the swing arm 41. A height H1 of the front end of the lower surface of the battery 61 is located below a height H2 of an uppermost surface of the motor case 44 and below a height H3 of an uppermost surface of the motor 45. A height H4 of the rear end of the lower surface of the battery 61 is located above the height H2 of the uppermost surface of the motor case 44 and above the height H3 of the uppermost surface of the motor 45. By positioning the lower surface front end of the battery 61 on the lower side, the battery 61 with a large capacity can be installed. By positioning the lower surface rear end of the battery 61 on the upper side, the swing space for the swing arm 41 is secured, and the riding comfort of the straddle-type vehicle 1 is improved.

In this way, the front end of the lower surface of the battery 61 is installed low by using a front space of the motor case 44. By lowering the front end of the lower surface of the battery 61, even in a case where the motor case 44 and the motor 45 are positioned directly below the battery 61, the center of gravity O1 of the battery 61 can be lowered while ensuring the space between the motor case 44 and the battery 61. By installing the entire battery 61 low, the battery 61 can be brought closer to the motor 45 in the swing arm 41. A battery terminal (not shown) of the battery 61 and a motor terminal (not shown) of the motor 45 are close to each other, and a cable 68 extending from the battery 61 to the motor 45 can be shortened.

By tilting the battery 61 forward, the front end of the upper surface of the battery 61 is separated from the front seat surface 36 of the seat 35. The upper surface 67 of the battery 61 is tilted such that the front end of the upper surface of the battery 61 is positioned below the rear end of the upper surface. The hinge 38 that swingably couples the seat 35 is provided at the upper surface front end of the battery 61. The hinge 38 is provided using the space between the battery 61 and the seat 35. The hinge 38 does not protrude upward from the seat 35. At the rear side of the hinge 38, a bottom plate 39 of the seat 35 bulges downward, so that the cushion thickness between the front seat surface 36 of the seat 35 and the bottom plate 39 is increased.

A front-rear position P9 of the rear end of the upper surface of the battery 61 is located behind a front-rear position P10 of a rear end of the front seat surface 36 of the seat 35, and a cushion thickness of the front seat surface 36 of the seat 35 is increased. A height H5 of the rear end of the upper surface of the battery 61 is located above a height H6 of a rotation shaft 38a of the hinge 38. A height H7 of the front end of the upper surface of the battery 61 is located below the height H6 of the rotation shaft 38a of the hinge 38. By positioning the upper surface rear end of the battery 61 on the upper side, the battery 61 with a large capacity can be installed. By positioning the upper surface front end of the battery 61 on the lower side, the cushion thickness of the seat 35 is ensured sufficiently, and the riding comfort of the straddle-type vehicle 1 is improved.

As shown in FIG. 5, at least a rear half of the hinge 38 is located behind the front-rear position P1 of the upper end of the front surface of the battery 61. Most of the hinge 38 is supported by the battery 61 from directly below, and a downward force acting on the hinge 38 is received by the battery 61. The front-rear position P1 of the upper end of the front surface of the battery and the rotation shaft 38a of the hinge 38 are located in front of the front-rear position P2 of the rear end of the tread surface of the floor board 31. While keeping the tread surface of the floor board 31 wide, a front portion of the seat 35 can be extended forward and the front portion of the seat 35 can be firmly supported via the hinge 38.

As described above, according to the straddle-type vehicle 1 of the present embodiment, the battery 61 having a large capacity is installed in the forward tilting position. By positioning the front surface lower end of the battery 61 on the rear side, a wide tread surface of the floor board 31 is secured, and the feet of the driver are less likely to be cramped. By positioning the rear surface upper end of the battery 61 on the front side, the rear space of the battery 61 is widely secured, and components such as the storage box 51 and a tail lamp can be easily installed. By positioning the lower surface rear end of the battery 61 on the upper side, the swing space of the swing arm 41 is widely secured, and riding comfort of the straddle-type vehicle 1 is improved. By positioning the upper surface front end of the battery 61 on the lower side, the cushion thickness of the seat 35 is sufficiently secured. Vibrations from the vehicle body are easily absorbed by the cushion thickness of the seat 35, and the riding comfort of the straddle-type vehicle 1 is improved. Further, the center of gravity O1 of the battery 61 is positioned to the front side as the front surface 64 of the battery 61 tilts forward. By increasing a load shared by the front wheel, it is possible to reduce the shimmy phenomenon that causes small vibrations in the handle 26 and the like.

In the present embodiment, the battery is formed in a substantially rectangular shape in a side view. Alternatively, a shape of the battery is not particularly limited as long as the battery can be installed below the seat.

Further, in the present embodiment, a double seat with seat surfaces for a driver and a passenger is exemplified as the seat. Alternatively, the seat may be a single seat in which only a seat surface for a driver is formed. In the case of a single seat, the storage box may be removed, or a front-rear length of the storage box may be narrowed.

Further, in the present embodiment, the storage box is installed behind the battery. Alternatively, components other than the storage box may be installed behind the battery.

Further, in the present embodiment, the storage box is formed in a bottomed cylindrical shape having an open upper surface. Alternatively, the shape of the storage box is not particularly limited as long as the storage box is formed to be able to store items.

Further, in the present embodiment, the motor is installed at the base end of the swing arm. Alternatively, the motor may be installed at a rear end of the swing arm.

Further, in the present embodiment, the pair of side frames are formed to rise rearward. Alternatively, the pair of side frames may be formed to pass along the sides of the battery. For example, the pair of side frames may function as seat frames.

Further, in the present embodiment, the lower surface of the battery is supported by the pair of side frames. Alternatively, the upper surface of the battery may be supported by the pair of side frames.

Further, in the present embodiment, the hinge is provided at the upper surface front end of the battery. Alternatively, the hinge may be provided between the battery and the seat.

Further, the layout of the motor according to the present embodiment is not limited to the above-described straddle-type vehicle, and may be adopted in other straddle-type vehicles. The straddle-type vehicle is not limited to a general vehicle in which a driver rides on a seat in a posture straddling the seat, and includes a scooter-type vehicle in which the driver rides on the seat without straddling the seat.

As described above, a first aspect is a straddle-type vehicle (1) of an electric type that travels using electric power, the straddle-type vehicle including: a seat (35) provided behind a handle (26) and on which buttocks of a driver are to be placed; a floor board (31) installed below and in front of the seat; and a battery (61) of a fixed type installed below the seat, in which the battery is tilted forward such that a lower end of a front surface of the battery is brought close to the floor board, and the lower end of the front surface of the battery is located behind an upper end of the front surface of the battery. According to this configuration, even in a case where a battery having a large capacity is installed, the lower end of the front surface of the battery is positioned rearward due to the forward tilting of the battery, so that a wide tread surface of the floor board is secured, and the feet of the driver are less likely to be cramped. The center of gravity of the battery is positioned to a front side as the front surface of the battery tilts forward. By increasing a load shared by the front wheel, it is possible to reduce the shimmy phenomenon that causes small vibrations in the handle and the like.

A second aspect is directed to the first aspect, in which the upper end of the front surface of the battery is located in front of a rear end of a tread surface of the floor board. According to this configuration, it is possible to secure a wide tread surface of the floor board while a battery with a large capacity is installed.

A third aspect is directed to the first aspect or the second aspect, in which the lower end of the front surface of the battery is located behind the rear end of the tread surface of the floor board. According to this configuration, by positioning the lower end of the front surface of the battery on the rear side, a wide tread surface of the floor board is secured, and the feet of the driver are less likely to be cramped.

A fourth aspect is directed to any one of the first to third aspects, in which a fixing portion (front fixing portion 62) protrudes downward from a front end of a lower surface of the battery, and the fixing portion is located behind the lower end of the front surface of the battery. According to this configuration, the front fixing portion is brought close to the front surface of the battery, so that a fixing pitch between the front and rear fixing portions is increased to increase the support rigidity. Since the front fixing portion does not protrude forward from the front surface of the battery, a wide tread surface of the floor board can be secured.

A fifth aspect is directed to any one of the first to third aspects, in which a hinge (38) is provided at a front end of an upper surface of the battery, and at least a rear half of the hinge is located behind than the upper end of the front surface of the battery. Most of the hinge is supported by the battery from directly below, and a downward force acting on the hinge is received by the battery.

A sixth aspect is directed to the fifth aspect, in which the upper end of the front surface of the battery and a rotation shaft (38a) of the hinge is located in front of a rear end of a tread surface of the floor board. While keeping the tread surface of the floor board wide, a front portion of the seat can be extended forward and the front portion of the seat can be firmly supported via the hinge.

A seventh aspect is directed to any one of the first to sixth aspects, and further includes a body cover (23) covering the battery from a front side below the seat, in which a front surface of the body cover is tilted along the front surface of the battery, and a portion where a lower end of the body cover is in contact with the floor board is a rear end of a tread surface of the floor board. According to this configuration, an upper side of the body cover protrudes forward to widen an installation space for the battery, and a lower side of the body cover is retracted rearward to widen the tread surface of the floor board.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A straddle-type vehicle (1) of an electric type that travels using electric power, the straddle-type vehicle (1) comprising:
a seat (35) provided behind a handle (26) and on which buttocks of a driver are to be placed;
a floor board (31) installed below and in front of the seat (35); and
a battery (61) of a fixed type installed below the seat (35),
wherein the battery (61) is tilted forward such that a lower end of a front surface of the battery (35) is brought close to the floor board (31), and
wherein the lower end of the front surface of the battery (61) is located behind an upper end of the front surface of the battery (61).

2. The straddle-type vehicle (1) according to claim 1,
wherein the upper end of the front surface of the battery (61) is located in front of a rear end of a tread surface of the floor board (31).

3. The straddle-type vehicle (1) according to claim 2,
wherein the lower end of the front surface of the battery (61) is located behind the rear end of the tread surface of the floor board (31).

4. The straddle-type vehicle (1) according to claim 1,
wherein a fixing portion (62) protrudes downward from a front end of a lower surface of the battery (61), and
the fixing portion (62) is located behind the lower end of the front surface of the battery (61).

5. The straddle-type vehicle (1) according to claim 1,
wherein a hinge (38) is provided at a front end of an upper surface of the battery (61), and
wherein at least a rear half of the hinge (38) is located behind the upper end of the front surface of the battery (61).

6. The straddle-type vehicle (1) according to claim 5,
wherein the upper end of the front surface of the battery (61) and a rotation shaft (38a) of the hinge (38) is located in front of a rear end of a tread surface of the floor board (31).

7. The straddle-type vehicle (1) according to any one of claims 1 to 6, further comprising:
a body cover (23) covering the battery (61) from a front side, below the seat (35),
wherein a front surface of the body cover (23) is tilted along the front surface of the battery (61), and
wherein a portion where a lower end of the body cover (23) is in contact with the floor board (31) is a rear end of a tread surface of the floor board (31).
